# FASCICULE DE BREVET EUROPEEN

(11) **EP 1 146 244 B1**
(45) Date de publication et mention de la délivrance du brevet: **10.12.2008**
(21) Numéro de dépôt: 01400897.3
(22) Date de dépôt: 06.04.2001
(51) Int. Cl.: F16D 23/14, F16D 25/08

(54) **Butée de débrayage**
Kupplungsausrücklager
Clutch release bearing

(30) Priorité: 12.04.2000 FR 0004708
(43) Date de publication de la demande: 17.10.2001
(73) Titulaire: SKF FRANCE, F-92140 Clamart (FR)
(72) Inventeur: Ponson, Frédéric, 37230 Luynes (FR); Arnault, Benoit, 37100 Tours (FR); Girardin, Hervé, 37300 Joué-les-Tours (FR)
(74) Mandataire: Casalonga, Axel

(56) Documents cités:
- DE-A- 19 755 496
- US-A- 4 371 068

## Description

La présente invention concerne le domaine des butées de débrayage et des paliers à roulement pour butées de débrayage. Un dispositif de butée de débrayage selon les préambules des revendications 1 et 9 est connu du document DE-A1-197 55 496.

Les butées de débrayage sont utilisées notamment dans les véhicules automobiles et comportent généralement un élément d'attaque apte à coopérer avec un diaphragme d'embrayage, l'élément d'attaque étant monté sur un élément de manoeuvre pouvant se mouvoir en translation sous l'action d'un organe de commande tel qu'une fourchette de débrayage ou le piston d'une commande hydraulique. L'élément d'attaque peut en outre se déplacer radialement par rapport à l'élément de manoeuvre dans la limite nécessaire à l'auto-alignement de l'élément d'attaque par rapport au diaphragme.

De façon connue, l'élément d'attaque se compose d'un roulement de butée pourvu d'une bague tournante et d'une bague non tournante entre lesquelles sont disposées des billes, éventuellement maintenues par une cage. La bague tournante est en contact avec le diaphragme de l'embrayage. Des moyens d'étanchéité peuvent être prévus pour éviter une sortie de la graisse servant à la lubrification des éléments roulants et empêcher l'entrée de particules étrangères susceptibles de venir polluer l'intérieur du roulement.

L'élément d'attaque est monté sur l'élément de manoeuvre par l'intermédiaire de la bague non tournante du roulement avec une possibilité de déplacement radial omnidirectionnel par rapport à l'élément de manoeuvre dans le cas où, au montage, l'axe du diaphragme et l'axe du roulement de butée ne sont pas exactement confondus. Un organe servant à l'auto-alignement assure, en outre, la retenue axiale du roulement de butée sur l'élément de manoeuvre. Cette retenue est rendue tout spécialement nécessaire pour éviter la désolidarisation accidentelle du roulement d'avec l'élément de manoeuvre lors de la manipulation et du transport de la butée avant son montage dans un embrayage.

Deux types principaux d'organes d'auto-alignement sont utilisés couramment dans les butées de débrayage :

Les manchons élastiques à élasticité radiale réalisés en élastomère ou en matériau souple similaire.

Les rondelles métalliques à élasticité axiale, du type conique, biconique ou à languettes, avec une extrémité qui maintient en appui une portion radiale de la bague non tournante du roulement sur une surface radiale correspondante de l'élément de manoeuvre et une extrémité opposée, en contact avec l'élément de manoeuvre.

L'invention propose un nouveau type d'élément d'attaque pourvu d'un organe d'auto-alignement simple, économique et compact.

Le dispositif de butée de débrayage, selon un aspect de l'invention, est du type comprenant un élément d'attaque destiné à être monté sur un élément de manoeuvre. L'élément d'attaque comprend un roulement pourvu d'une bague tournante et d'une bague non tournante, ledit roulement étant apte à se déplacer radialement par rapport à l'élément de manoeuvre pour son auto-alignement par rapport au dit élément de manoeuvre, la bague non tournante comprenant une portion radiale dirigée vers l'intérieur. Le dispositif comprend un moyen de solidarisation axiale de l'élément d'attaque sur l'élément de manoeuvre. Ledit moyen de solidarisation axiale comprend au moins deux agrafes pourvues chacune d'une première partie disposée axialement en contact avec la portion radiale de la bague non tournante, et dont l'extrémité libre s'étend radialement vers l'extérieur, d'une deuxième partie s'étendant à partir de la première partie vers l'élément de manoeuvre, et d'une troisième partie s'étendant à partir de la deuxième partie vers l'alésage de la bague non tournante. Ledit moyen de solidarisation axiale comprend une douille pourvue d'une surface radiale de contact avec la portion radiale de la bague non tournante, ladite portion radiale de la bague non tournante et ladite douille étant pincées entre les première et troisième parties des agrafes.

La bague tournante peut comprendre également une portion radiale dirigée vers l'intérieur pour former une surface de contact avec un diaphragme d'embrayage. Ledit moyen de solidarisation axiale sert à l'auto-alignement et peut être utilisé avec un roulement dont les bagues présentent des portions radiales faiblement espacées dans le sens axial et/ou dont les extrémités libres des portions radiales sont de diamètres voisins ou égaux.

Avantageusement, la deuxième partie est sensiblement perpendiculaire à la première partie et disposée à l'intérieur de l'alésage de la portion radiale de la bague non tournante, la troisième partie est sensiblement parallèle à la première partie, et lesdites agrafes sont pourvues d'une quatrième partie sensiblement parallèle à la deuxième partie et s'étendant à partir de la troisième partie axialement à l'opposé de la deuxième partie.

Avantageusement, lesdites agrafes sont pourvues d'une partie d'accrochage sur l'élément de manoeuvre.

Dans un mode de réalisation de l'invention, ladite douille est apte à transmettre des efforts axiaux entre la bague non tournante et l'élément de manoeuvre.

Dans un mode de réalisation de l'invention, la douille comprend une partie sensiblement tubulaire en contact avec l'élément de manoeuvre et une partie sensiblement radiale en contact avec la bague non tournante.

Dans un mode de réalisation de l'invention, la partie sensiblement radiale comprend une surface en contact avec la portion radiale de la bague non tournante et une surface opposée en contact avec une partie des agrafes.

Dans un mode de réalisation de l'invention, ladite surface opposée est de forme concordante avec une partie des agrafes.

De préférence, la partie sensiblement tubulaire est pourvue d'évidements dans lesquels est disposé une partie des agrafes.

L'invention concerne, également, un élément d'attaque de butée de débrayage, du type comprenant un élément d'attaque destiné à être monté sur un élément de manoeuvre. L'élément d'attaque comprend un roulement pourvu d'une bague tournante et d'une bague non tournante, ledit roulement étant prévu pour pouvoir se déplacer radialement par rapport à l'élément de manoeuvre pour son auto-alignement par rapport au dit élément de manoeuvre, la bague non tournante comprenant une portion radiale dirigée vers l'intérieur. L'élément d'attaque comprend un moyen de solidarisation axiale sur l'élément de manoeuvre. Ledit moyen de solidarisation axiale comprend au moins deux agrafes pourvues chacune d'une première partie disposée axialement en contact avec la portion radiale de la bague non tournante, et dont l'extrémité libre s'étend radialement vers l'extérieur, d'une deuxième partie s'étendant à partir de la première partie vers l'élément de manoeuvre, et d'une troisième partie s'étendant à partir de la deuxième partie vers l'alésage de la bague non tournante, et une douille pourvue d'une surface radiale de contact avec la portion radiale de la bague non tournante, ladite portion radiale de la bague non tournante et ladite douille étant pincées entre les première et troisième parties des agrafes.

La présente invention concerne également un procédé de montage d'une butée de débrayage du type comprenant un élément d'attaque destiné à être monté sur un élément de manoeuvre. L'élément d'attaque comprend un roulement pourvu d'une bague tournante et d'une bague non tournante, ledit roulement étant apte à se déplacer radialement par rapport à l'élément de manoeuvre pour son auto-alignement par rapport au dit élément de manoeuvre, la bague non tournante comprenant une portion radiale dirigée vers l'intérieur. Le dispositif comprend un moyen de solidarisation axiale de l'élément d'attaque sur l'élément de manoeuvre. On fixe axialement un moyen de solidarisation axiale de l'élément d'attaque et de l'élément de manoeuvre sur l'élément d'attaque puis on rapproche par un mouvement axial l'élément d'attaque et l'élément de manoeuvre jusqu'à contact et encliquetage du moyen de solidarisation axiale sur l'élément de manoeuvre.

Avantageusement, on attache une douille sur la portion radiale de la bague non tournante, préalablement à la fixation sur l'élément de manoeuvre.

Avantageusement, les mêmes agrafes se fixent à la fois sur l'élément d'attaque puis sur l'élément de manoeuvre assurant ainsi la liaison de ces deux éléments en même temps que la fonction d'auto-alignement.

La présente invention sera mieux comprise et d'autres avantages apparaîtront à la lecture de la description détaillée de quelques modes de réalisation pris à titre d'exemples nullement limitatifs et illustrés par les dessins annexés, sur lesquels :
- la figure 1 est une vue en coupe axiale d'une butée d'embrayage selon un mode de réalisation de l'invention; et
- la figure 2 est une vue en coupe axiale de la butée d'embrayage de la figure 1 selon un plan de coupe décalé de 90° par rapport à celui de la figure 1.

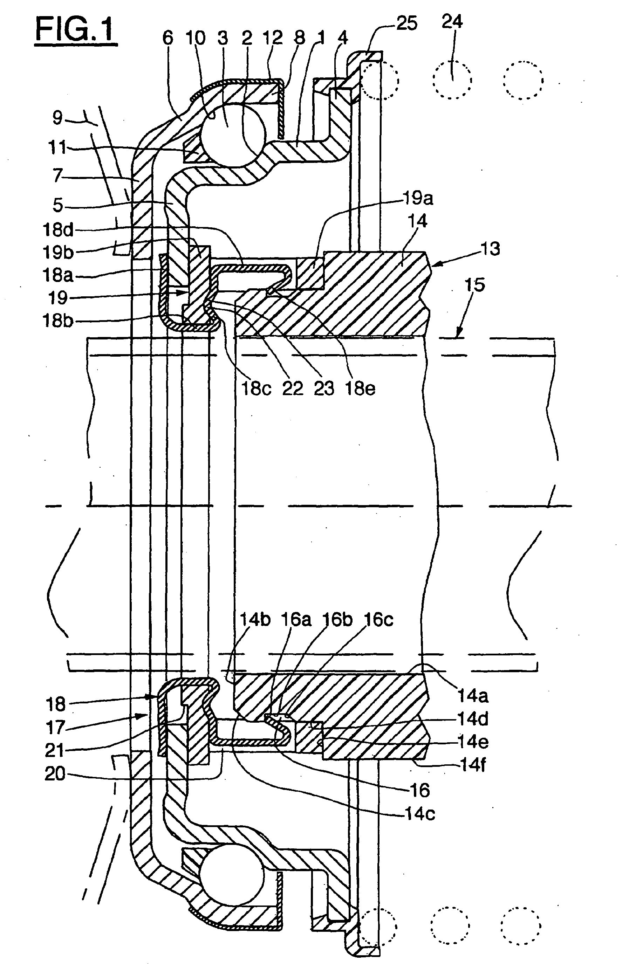

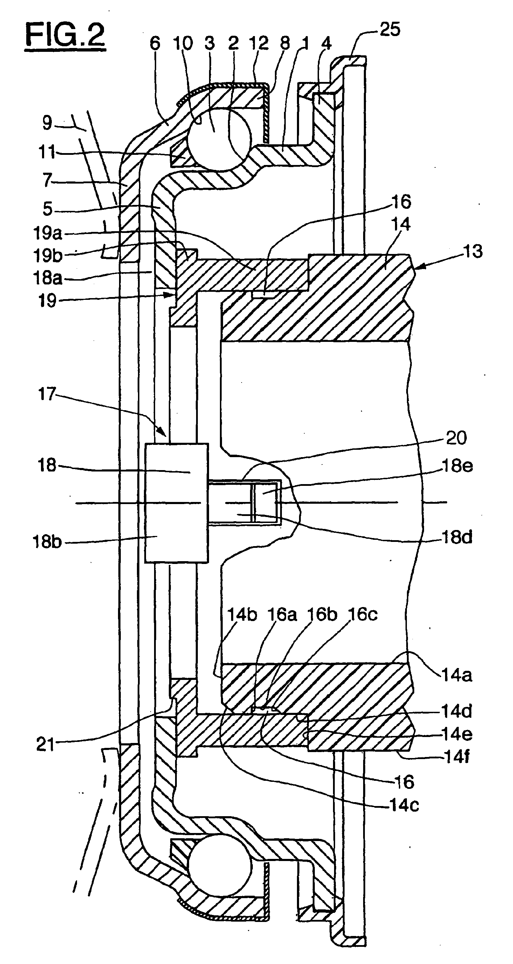

Tel qu'il est représenté sur les figures 1 et 2, le roulement de butée d'embrayage comprend une bague intérieure de roulement 1 à paroi mince réalisée par emboutissage d'une tôle ou d'un tube présentant un chemin de roulement circulaire en forme de portion de tore 2 pour une rangée de billes 3, ledit chemin présentant en section axiale méridienne un profil en arc de cercle concave. La bague intérieure 1 comporte une portion radiale 4 dirigée vers l'extérieur et une portion radiale 5 dirigée vers l'intérieur, lesdites portions radiales 4 et 5 étant disposées d'un côté et de l'autre des éléments roulants. Pendant le fonctionnement de la butée d'embrayage, la bague intérieure 1 reste non tournante.

Le palier à roulement se complète par une bague extérieure 6 présentant une portion radiale 7 en saillie vers l'intérieur de l'ensemble et une portion cylindrique 8 du côté de la portion radiale 4. La portion radiale 7 est capable de venir en contact avec la surface d'un diaphragme 9 ou d'un élément équivalent permettant l'actionnement d'un embrayage, par exemple de véhicule automobile. La bague extérieure 6 comprend également une paroi mince et peut être réalisée par emboutissage d'une tôle ou d'un tube. La bague extérieure 6 présente un chemin de roulement circulaire 10 en forme de portion de tore pour la rangée de billes 3, ledit chemin présentant en section axiale méridienne un profil en arc de cercle concave. Les billes 3 sont maintenues par une cage 11 entre le chemin de roulement 2 de la bague intérieure 1 et celui 10 de la bague extérieure 6. Le roulement à billes se complète par un organe d'étanchéité 12 monté de manière étanche sur la branche cylindrique 8 de la bague extérieure 5.

Un élément de manoeuvre rigide, appelé encore élément de guidage, référencé 13 dans son ensemble sert de support au roulement à billes précité et comprend une partie tubulaire en forme de douille 14 réalisée en matériau synthétique.

L'élément de manoeuvre 13 est monté sur un tube-guide 15 présentant une surface extérieure cylindrique et est apte à se déplacer axialement par rapport à ce dernier. L'élément de guidage 13 peut être une pièce distincte de l'organe de commande actionnant le dispositif ou faire partie intégrante de celui-ci. C'est ainsi que l'élément de guidage 13 peut être constitué, par exemple, par le piston hydraulique d'un dispositif de butée de débrayage à commande hydraulique. L'extrémité libre de la douille 14 du côté du diaphragme 9 présente une forme étagée avec une surface d'extrémité radiale 14b s'étendant vers l'extérieur à partir de l'alésage 14a, un chanfrein oblique 14c, une surface cylindrique extérieure 14d et une surface radiale 14e s'étendant vers l'extérieur à partir de la surface cylindrique 14d et rejoignant la surface cylindrique extérieure 14f de la douille 14. Dans la surface cylindrique 14d est formée une rainure annulaire 16 disposée sensiblement à mi-distance entre le chanfrein 14c et la surface radiale 14e. La rainure 16 présente une surface sensiblement radiale 16a du côté du chanfrein 14c, un fond sensiblement cylindrique 16b et une surface oblique 16c du côté de la surface radiale 14e.

La butée de débrayage se complète par un moyen de solidarisation axiale 17 entre l'élément de manoeuvre 13 et le roulement de butée, plus précisément la bague intérieure 1 dudit roulement de butée. Le moyen de solidarisation axiale 17 est du type permettant un déplacement radial de la bague non tournante 1 du roulement de butée par rapport à l'élément de manoeuvre 13.

Le moyen de solidarisation axiale 17 comprend au moins deux agrafes 18 et une douille intermédiaire 19. Les agrafes 18 sont circonférentiellement régulièrement réparties et pourront être au nombre de deux, trois ou quatre. Sur les figures 1 et 2 est représentée une butée de guidage à deux agrafes 18.

Chaque agrafe 18 est réalisée en tôle mince pliée ou emboutie et comprend cinq parties référencées de 18a à 18e. La première partie 18a est de forme générale radiale présentant une légère incurvation, et est disposée entre la portion radiale 5 de la bague non tournante 1 et la portion radiale 7 de la bague tournante 6, en contact avec la portion radiale 5. Comme on peut le voir sur la figure 1, l'extrémité libre de la première partie 18a s'étend au-delà du diamètre intérieur de l'extrémité libre de la portion radiale 7 de la bague tournante 6. L'incurvation de la première partie 18a est telle qu'elle présente une forme convexe dans sa zone de contact avec la portion radiale 5. La deuxième partie 18b s'étend à partir de l'extrémité de la première partie 18a du côté intérieur. La deuxième partie 18b est dirigée vers l'élément de manoeuvre 13 et est disposée axialement au niveau de la portion radiale 5 de la bague non tournante 1. La troisième partie 18c s'étend radialement vers l'extérieur à partir de l'extrémité de la deuxième partie 18b disposée du côté de l'élément de manoeuvre 13, jusqu'au-delà du diamètre intérieur de la portion radiale 5. Les trois parties 18a, 18b et 18c confèrent à l'agrafe 18 une forme de U, les première et troisième parties 18a et 18c étant généralement parallèles. La quatrième partie 18d s'étend à partir de l'extrémité de grand diamètre de la troisième partie 18c, axialement en direction opposée au diaphragme 9. Les deuxième et quatrième parties 18b et 18d sont généralement parallèles et s'étendent en direction opposée en partant de la troisième partie 18c. Enfin, l'agrafe 18 se complète par une cinquième partie 18e dite d'accrochage formée par une extrémité libre de la quatrième partie 18d repliée à plus de 90° vers l'intérieur pour former un crochet. La partie d'accrochage 18e est donc dirigée axialement en direction du diaphragme 9 et radialement légèrement vers l'intérieur. A l'état monté, la partie d'accrochage 18e fait saillie dans la rainure 16 de la douille 14.

La douille supplémentaire 19 est de forme générale annulaire à section en L ou en T avec une partie sensiblement tubulaire 19a et une partie sensiblement radiale 19b. La partie radiale 19b s'étend à partir de l'une des extrémités de la partie tubulaire 19a. A l'état monté, comme on peut le voir sur les figures 1 et 2, la partie tubulaire 19a entoure la surface cylindrique 14d de la douille 14 et est en contact de butée avec la surface radiale 14e de la même douille 14. La partie radiale 19b est en contact avec la portion radiale 5 de la bague non tournante 1 du côté opposé au diaphragme 9 et est en contact avec la troisième partie 18c de l'agrafe 18 du côté de la douille 14.

La partie tubulaire 19a est percée d'évidements sous la forme de fenêtres 20. Toutefois on pourrait concevoir que les fenêtres 20 soient remplacées par de simples creux. Les fenêtres 20 sont en nombre supérieur ou égal à celui des agrafes 18 et permettent de loger la quatrième partie 18d desdites agrafes 18.

Ainsi, la portion radiale 5 de la bague non tournante 1 est en contact du côté du diaphragme 9 avec la première partie 18a d'agrafe 18 et du côté opposé avec la partie radiale 19b de la douille 19. Ladite partie radiale 19b est en contact du côté de la douille 14 avec la troisième partie 18c de l'agrafe 18 et du côté opposé, avec la portion radiale 5 de la bague non tournante 1.

La bague intérieure 1 voit sa position axiale déterminée dans un sens (à droite sur les figures) par la surface de la portion radiale 19b de la douille intermédiaire 19 elle-même en appui par l'extrémité libre de sa partie tubulaire 19a sur la surface radiale 14e de la douille 14. Dans l'autre sens, la position axiale de la bague non tournante 1 est déterminée par la première partie 18a de l'agrafe 18, ladite agrafe 18 étant elle-même retenue par sa partie d'accrochage 18e sur la surface sensiblement radiale 16a de la rainure 16 de la douille 14.

La bague non tournante 1 peut se déplacer dans le sens radial en glissant d'un côté sur la première partie 18a de l'agrafe 18, de l'autre côté sur la surface de la partie radiale 19b de la douille intermédiaire 18.

Une limitation du mouvement radial de la bague non tournante 1 par rapport à la douille supplémentaire 19 et par conséquent à la douille 14 peut être obtenue en prévoyant un redan 21 faisant saillie en direction du diaphragme 9 à partir de la partie radiale 19b de la douille intermédiaire 19 à proximité de la deuxième partie 18b de l'agrafe 18.

Pour parfaire le maintien mutuel de l'agrafe 18 et de la douille intermédiaire 19, une déformation est prévue sur la troisième partie 18c de l'agrafe 18 qui présente donc un bossage 22 en concordance de forme avec un creux 23 formé dans la partie radiale 19b de la douille intermédiaire 19 sur sa surface disposée du côté de la douille 14.

Il est également prévu un ressort 24 de précontrainte de la butée et un élément d'accrochage 25. Le ressort 24 est de type hélicoïdal de diamètre de même ordre de grandeur que le diamètre extérieur de la portion radiale 4 de la bague non tournante 1. L'élément d'accrochage 25 vient s'encliqueter sur l'extrémité libre de ladite portion radiale 4 et assure l'interface entre le ressort 24 et la bague non tournante 1. Dans le cas d'une butée de type hydraulique, le ressort 24 assure le maintien de la butée en appui contre le diaphragme avec un certain effort axial de précontrainte en-dehors des périodes de manoeuvre de l'embrayage, c'est-à-dire lorsqu'il n'y a pas de pression hydraulique dans le dispositif destiné à actionner l'élément de manoeuvre 13.

Le montage de la butée s'effectue comme suit. On présente la douille supplémentaire 19 dans l'alésage de la bague non tournante 1 jusqu'à contact avec la portion radiale 5. On solidarise ces deux pièces au moyen des agrafes 18 que l'on monte par un mouvement radial vers l'extérieur avec mise en place des bossages 22 dans les creux 23 et de la quatrième portion 18d dans les fenêtres correspondantes 20. A cette étape, la bague non tournante 1, les agrafes 18 et la douille supplémentaire 19 forment un sous-ensemble qui peut être manipulé aisément sans risque de perte de pièces.

Les autres éléments du roulement, à savoir la rangée de billes 3, la cage 11, et la bague tournante 6, peuvent être montés soit au préalable avant le montage de la douille supplémentaire 19 et de l'agrafe 18, soit maintenant à savoir, après le montage de la douille supplémentaire 19 et de l'agrafe 18 sur la bague non tournante 1. Le montage de ce sous-ensemble sur la douille 14 d'un élément de manoeuvre 13 s'effectue par un simple mouvement axial au cours duquel la partie tubulaire 19a de la douille supplémentaire 19 vient glisser autour de la surface cylindrique 14d après, éventuellement, s'être auto-centrée grâce au chanfrein 14c jusqu'à contact de butée avec la surface radiale 14e, les parties d'accrochage 18e des agrafes 18 ayant au préalable franchi en s'écartant le chanfrein 14c puis la portion de la surface cylindrique 14e disposée entre le chanfrein 14c et la rainure 16 puis ayant repris leur forme en se logeant dans ladite rainure 16.

On comprend donc que les étapes de montage sont particulièrement simples et s'effectuent sans mouvement complexe par positionnement de la douille intermédiaire 19 dans l'alésage de la bague non tournante, montage des deux agrafes à partir de l'alésage de la douille supplémentaire 19 et montage du sous-ensemble sur l'élément de manoeuvre par simple encliquetage axial sans orientation angulaire, notamment grâce au fait que la rainure 16 est circonférentiellement continue. Les parties d'accrochage 18e des agrafes 18 peuvent donc venir faire saillie dans la rainure 16 en n'importe quel point de la circonférence de la douille 14. Les fenêtres 20 prévues dans la partie tubulaire 19a de la douille supplémentaire 19 permettent un encombrement réduit du moyen de solidarisation axiale 17. De plus, la portion radiale 5 de la bague non tournante 1 et la portion radiale 7 de la bague tournante 6 peuvent être relativement proches l'une de l'autre axialement et présenter des diamètres intérieurs également relativement proches dans la mesure où seule la première partie 18a de l'agrafe 18 est disposée entre lesdites deux portions radiales 5 et 7. L'extrémité libre de la première partie 18a des agrafes 18 peut s'étendre radialement au-delà de l'alésage de la portion radiale 7 de la bague non tournante 1 car le montage des agrafes 18 s'effectue à partir de l'intérieur par un mouvement radial vers l'extérieur, ce mouvement étant indépendant d'avec la portion radiale 7.

Le moyen de solidarisation axiale ainsi réalisé, peut s'appliquer non seulement à la fixation d'une butée de débrayage sur un piston mais aussi sur tout autre type d'élément de manoeuvre. La butée pourrait aussi être fixée sur un élément de manoeuvre formé d'une pièce intermédiaire venant elle-même se fixer en bout d'un piston actionné hydrauliquement. On appréciera que les agrafes 18 remplissent à la fois une fonction d'auto-alignement par friction de la butée et de retenue de ladite butée sur l'élément de manoeuvre. La douille intermédiaire 19 peut être réalisée en alliage léger, par exemple à base d'aluminium, ce qui permet d'obtenir facilement cette pièce à moindre coût par moulage.

On remarquera également que l'utilisation d'agrafes permet de s'accomoder facilement de roulements de butée dans lesquels il ne subsiste qu'un entrefer axial très faible entre les portions radiales dirigées vers l'intérieur des bagues tournante et non tournante.

## Revendications

1. Dispositif de butée de débrayage du type comprenant un élément d'attaque destiné à être monté sur un élément de manoeuvre (13), l'élément d'attaque comprenant un roulement pourvu d'une bague tournante (6) et d'une bague non tournante (1), ledit roulement étant apte à se déplacer radialement par rapport à l'élément de manoeuvre pour son auto-alignement par rapport au dit élément de manoeuvre, la bague non tournante comprenant une portion radiale (5) dirigée vers l'intérieur, le dispositif comprenant un moyen de solidarisation axiale (17) de l'élément d'attaque sur l'élément de manoeuvre, **caractérisé par le fait que** ledit moyen de solidarisation axiale comprend au moins deux agrafes (18) pourvues chacune d'une première partie (18a) disposée axialement en contact avec la portion radiale de la bague non tournante, et dont l'extrémité libre s'étend radialement vers l'extérieur, d'une deuxième partie (18b) s'étendant à partir de la première partie vers l'élément de manoeuvre, et d'une troisième partie (18c) s'étendant à partir de la deuxième partie vers l'alésage de la bague non tournante, et une douille (19) pourvue d'une surface radiale de contact avec la portion radiale de la bague non tournante, ladite portion radiale de la bague non tournante et ladite douille étant pincées entre les première et troisième parties des agrafes.

2. Dispositif selon la revendication 1, **caractérisé par le fait que** la deuxième partie est sensiblement perpendiculaire à la première partie et disposée à intérieur de l'alésage de la portion radiale de la bague non tournante, la troisième partie est sensiblement parallèle à la première partie, et lesdites agrafes sont pourvues d'une quatrième partie (18d) sensiblement parallèle à la deuxième partie et s'étendant à partir de la troisième partie axialement à l'opposé de la deuxième partie.

3. Dispositif selon la revendication 1 ou 2, **caractérisé par le fait que** lesdites agrafes sont pourvues d'une partie d'accrochage (18e) sur l'élément de manoeuvre.

4. Dispositif selon l'une quelconque des revendications précédentes, **caractérisé par le fait que** ladite douille est apte à transmettre des efforts axiaux entre la bague non tournante et l'élément de manoeuvre.

5. Dispositif selon l'une quelconque des revendications précédentes, **caractérisé par le fait que** la douille comprend une partie sensiblement tubulaire (19a) en contact avec l'élément de manoeuvre et une partie sensiblement radiale (19b) en contact avec la bague non tournante.

6. Dispositif selon la revendication 5, **caractérisé par le fait que** la partie sensiblement radiale comprend une surface en contact avec la portion radiale de la bague non tournante et une surface opposée en contact avec une partie des agrafes.

7. Dispositif selon la revendication 6, **caractérisé par le fait que** ladite surface opposée est de forme concordante avec une partie des agrafes.

8. Dispositif selon l'une quelconque des revendications 5 à 7, **caractérisé par le fait que** la partie sensiblement tubulaire est pourvue d'évidements dans lesquels est disposé une partie des agrafes.

9. Elément d'attaque de butée de débrayage, du type destiné à être monté sur un élément de manoeuvre, l'élément d'attaque comprenant un roulement pourvu d'une bague tournante (6) et d'une bague non tournante (1), ledit roulement étant prévu pour pouvoir se déplacer radialement par rapport à l'élément de manoeuvre pour son auto-alignement par rapport au dit élément de manoeuvre, la bague non tournante comprenant une portion radiale (5) dirigée vers l'intérieur, l'élément d'attaque comprenant un moyen de solidarisation axiale (17) sur l'élément de manoeuvre, **caractérisé par le fait que** ledit moyen de solidarisation axiale comprend au moins deux agrafes (18) pourvues chacune d'une première partie (18a) disposée axialement en contact avec la portion radiale de la bague non tournante, et dont l'extrémité libre s'étend radialement vers l'extérieur, d'une deuxième partie (18b) s'étendant à partir de la première partie vers l'élément de manoeuvre, et d'une troisième partie (18c) s'étendant à partir de la deuxième partie vers l'alésage de la bague non tournante, et une douille (19) pourvue d'une surface radiale de contact avec la portion radiale de la bague non tournante, ladite portion radiale de la bague non tournante et ladite douille étant pincées entre les première et troisième parties des agrafes.

10. Procédé de montage d'une butée de débrayage du type comprenant un élément d'attaque destiné à être monté sur un élément de manoeuvre, l'élément d'attaque comprenant un roulement pourvu d'une bague tournante et d'une bague non tournante, ledit roulement étant apte à se déplacer radialement par rapport à l'élément de manoeuvre pour son auto-alignement par rapport au dit élément de manoeuvre, la bague non tournante comprenant une portion radiale dirigée vers l'intérieur, le dispositif comprenant un moyen de solidarisation axiale de l'élément d'attaque sur l'élément de manoeuvre, dans lequel on fixe axialement un moyen de solidarisation axiale de l'élément d'attaque et de l'élément de manoeuvre sur l'élément d'attaque puis on rapproche par un mouvement axial l'élément d'attaque et l'élément de manoeuvre jusqu'à contact et encliquetage du moyen de solidarisation axiale sur l'élément de manoeuvre.

11. Procédé selon la revendication 10, dans lequel on attache une douille sur la portion radiale de la bague non tournante, préalablement à la fixation sur l'élément de manoeuvre.

12. Procédé selon la revendication 10 ou 11, dans lequel les mêmes agrafes se fixent à la fois sur l'élément d'attaque puis sur l'élément de manoeuvre.

## Claims

1. Clutch release bearing device of the type comprising an operating element intended to be mounted on an actuating element (13), the operating element comprising a rolling bearing provided with a rotating ring (6) and with a non-rotating ring (1), the said rolling bearing being capable of moving radially with respect to the actuating element in order to self-align with respect to the said actuating element, the non-rotating ring comprising an inwardly-facing radial portion (5), the device comprising a means (17) of axially securing the operating element to the actuating element, **characterized in that** the said axial-securing means comprises at least two clips (18) each provided with a first part (18a) positioned axially in contact with the radial portion of the non-rotating ring and the free end of which extends radially outwards, with a second part (18b) extending from the first part towards the actuating element, and with a third part (18c) extending from the second part towards the bore of the non-rotating ring, and a bushing (19) provided with a radial surface in contact with the radial portion of the non-rotating ring, the said radial portion of the non-rotating ring and the said bushing being gripped between the first and third parts of the clips.

2. Device according to Claim 1, **characterized in that** the second part is substantially perpendicular to the first part and positioned inside the bore of the radial portion of the non-rotating ring, the third part is substantially parallel to the first part, and said clips are provided with a fourth part (18d) substantially parallel to the second part and extending from the third part axially away from the second part.

3. Device according to Claim 1 or 2, **characterized in that** the said clips are provided with a catching part (18e) for catching on the actuating element.

4. Device according to any one of the preceding claims, **characterized in that** the said bushing is capable of transmitting axial load between the non-rotating ring and the actuating element.

5. Device according to any one of the preceding claims, **characterized in that** the bushing comprises a substantially tubular part (19a) in contact with the actuating element and a substantially radial part (19b) in contact with the non-rotating ring.

6. Device according to Claim 5, **characterized in that** the substantially radial part comprises a surface in contact with the radial portion of the non-rotating ring and an opposite surface in contact with part of the clips.

7. Device according to Claim 6, **characterized in that** the said opposite surface is of a shape that matches that of part of the clips.

8. Device according to any one of Claims 5 to 7, **characterized in that** the substantially tubular part is provided with recesses in which a part of the clips is located.

9. Clutch release bearing operating element of the type intended to be mounted on an actuating element, the operating element comprising a rolling bearing provided with a rotating ring (6) and with a non-rotating ring (1), the said rolling bearing being capable of moving radially with respect to the actuating element in order to self-align with respect to the said actuating element, the non-rotating ring comprising an inwardly-facing radial portion (5), the operating element comprising a means (17) of axially securing itself to the actuating element, **characterized in that** the said axial-securing means comprises at least two clips (18) each provided with a first part (18a) positioned axially in contact with the radial portion of the non-rotating ring and the free end of which extends radially outwards, with a second part (18b) extending from the first part towards the actuating element, and with a third part (18c) extending from the second part towards the bore of the non-rotating ring, and a bushing (19) provided with a radial surface in contact with the radial portion of the non-rotating ring, the said radial portion of the non-rotating ring and the said bushing being gripped between the first and third parts of the clips.

10. Method of fitting a clutch release bearing of the type comprising an operating element intended to be mounted on an actuating element, the operating element comprising a rolling bearing provided with a rotating ring and with a non-rotating ring, the said rolling bearing being capable of moving radially with respect to the actuating element in order to self-align with respect to the said actuating element, the non-rotating ring comprising an inwardly-facing radial portion, the device comprising a means of axially securing the operating element to the actuating element, in which a means of axially securing the operating element and the actuating element to one another is fixed axially onto the operating element then the operating element and the actuating element are brought closer together in an axial movement until the axial-securing means comes into contact with and clips onto the actuating element.

11. Method according to Claim 10, in which a bushing is attached to the radial portion of the non-rotating ring prior to attachment to the actuating element.

12. Method according to Claim 10 or 11, in which the same clips are attached both to the operating element and then to the actuating element.

## Patentansprüche

1. Vorrichtung zum Ausrücken einer Kupplung des Typs mit einem auf einem Betätigungselement (13) montierbaren Angriffselement mit einem einen rotierenden Ring (6) und einen nicht rotierenden Ring (1) aufweisenden Wälzlager, das zur selbsttätigen Ausrichtung mit Bezug auf das Betätigungselement relativ zu diesem radial verschieblich ist, wobei der nicht rotierende Ring einen sich radial nach innen erstreckenden Teil (5) hat und die Vorrichtung Mittel (17) zur axialen Befestigung des Angriffselements auf dem Betätigungselement aufweist, **dadurch gekennzeichnet, dass** die Mittel zur axialen Befestigung mindestens zwei Klammern (18), die jeweils mit einem ersten Teil (18a), der axial an dem radialen Teil des nicht rotierenden Ringes anliegt und sich mit seinem freien Ende radial nach außen erstreckt, mit einem zweiten Teil (18b), der sich von dem ersten Teil zu dem Betätigungselement hin erstreckt, und mit einem dritten Teil (18c) ausgebildet sind, der sich von dem zweiten Teil zur Bohrungswand des nicht rotierenden Ringes hin erstreckt, sowie eine mit einer radialen Anlagefläche an dem radialen Teil des nicht rotierenden Ringes anliegende Buchse (19) aufweisen, wobei der radiale Teil des nicht rotierenden Ringes und die Buchse zwischen den ersten und den dritten Teilen der Klammern eingespannt sind.

2. Vorrichtung nach Anspruch 1, **dadurch gekennzeichnet, dass** der zweite Teil im wesentlichen quer zum ersten Teil und im Inneren der Bohrung des radialen Teils des nicht rotierenden Ringes angeordnet ist, der dritte Teil im wesentlichen parallel zu dem ersten Teil ist und die Klammern mit einem vierten Teil (18d) ausgebildet sind, der sich von dem dritten Teil im wesentlichen parallel zu dem zweiten Teil axial in die zu diesem entgegengesetzte Richtung erstreckt.

3. Vorrichtung nach Anspruch 1 oder 2, **dadurch gekennzeichnet, dass** die Klammern mit einem Hakenteil (18e) zum Verhaken mit dem Betätigungselement ausgebildet sind.

4. Vorrichtung nach einem der vorhergehenden Ansprüche, **dadurch gekennzeichnet, dass** die Buchse tauglich ist, um axiale Kräfte zwischen dem nicht rotierenden Ring und dem Betätigungselement zu übertragen.

5. Vorrichtung nach einem der vorhergehenden Ansprüche, **dadurch gekennzeichnet, dass** die Buchse einen im wesentlichen rohrförmigen, an dem Betätigungselement anliegenden Teil (19a) und einen im wesentlichen radialen, an dem nicht rotierenden Ring anliegenden Teil (19b) aufweist.

6. Vorrichtung nach Anspruch 5, **dadurch gekennzeichnet, dass** der im wesentlichen radiale Teil mit einer Kontaktfläche an dem radialen Teil des nicht rotierenden Ringes und mit einer gegenüberliegenden Fläche an einem Teil der Klammern anliegt.

7. Vorrichtung nach Anspruch 6, **dadurch gekennzeichnet, dass** die gegenüberliegende Fläche eine dem Teil der Klammern entsprechende Form hat.

8. Vorrichtung nach einem der Ansprüche 5 bis 7, **dadurch gekennzeichnet, dass** der im wesentlichen rohrförmige Teil mit Ausnehmungen versehen ist, in welchen ein Teil der Klammern angeordnet ist.

9. Angriffselement eines Kupplungs-Ausrückers des auf einem Betätigungselement zu montierenden Typs mit einem einen rotierenden Ring (6) und einen nicht rotierenden Ring (1) aufweisenden Wälzlager, das zur selbsttätigen Ausrichtung mit Bezug auf das Betätigungselement relativ zu diesem radial verschieblich ist, wobei der nicht rotierende Ring einen sich radial nach innen erstreckenden Teil (5) hat und das Angriffselement Mittel (17) zu seiner axialen Befestigung auf dem Betätigungselement aufweist, **dadurch gekennzeichnet, dass** die Mittel zur axialen Befestigung mindestens zwei Klammern (18), die jeweils mit einem ersten Teil (18a), der axial an dem radialen Teil des nicht rotierenden Ringes anliegt und sich mit seinem freien Ende radial nach außen erstreckt, mit einem zweiten Teil (18b), der sich von dem ersten Teil zu dem Betätigungselement hin erstreckt, und mit einem dritten Teil (18c) ausgebildet sind, der sich von dem zweiten Teil zur Bohrungswand des nicht rotierenden Ringes hin erstreckt, sowie eine mit einer radialen Anlagefläche an dem radialen Teil des nicht rotierenden Ringes anliegende Buchse (19) aufweisen, wobei der radiale Teil des nicht rotierenden Ringes und die Buchse zwischen den ersten und den dritten Teilen der Klammern eingespannt sind.

10. Verfahren zur Montage eines Kupplungs-Ausrückers des Typs mit einem auf einem Betätigungselement zu montierenden Angriffselement mit einem einen rotierenden Ring und einen nicht rotierenden Ring aufweisenden Wälzlager, das zur selbsttätigen Ausrichtung mit Bezug auf das Betätigungselement relativ zu diesem radial verschieblich ist, wobei der nicht rotierenden Ring einen sich radial nach innen erstreckenden Teil hat und die Vorrichtung Mittel zur axialen Befestigung des Angriffselements auf dem Betätigungselement aufweist, in welchem Verfahren die Mittel zur axialen Befestigung des Angriffselements an dem Betätigungselement axial auf dem Angriffselement fixiert werden und dann das Angriffselement und das Betätigungselement durch eine axiale Bewegung angenähert werden, bis sie sich berühren und die axialen Befestigungsmittel auf dem Betätigungselement einrasten.

11. Verfahren nach Anspruch 10, wobei eine Buchse auf dem radialen Teil des nicht rotierenden Ringes befestigt wird, bevor sie auf dem Betätigungselement festgelegt wird.

12. Verfahren nach Anspruch 10 oder 11, wobei dieselben Klammern sowohl auf dem Angriffselement als dann auch auf dem Betätigungselement festgelegt werden.
